# EUROPEAN PATENT APPLICATION

(11) **EP 0 862 113 A2**
(43) Date of publication of application: **02.09.1998**
(21) Application number: 98301475.4
(22) Date of filing: 27.02.1998
(51) Int. Cl.: G06F 9/46

(54) **Autonomous agent architecture**

(30) Priority: 27.02.1997 US 808736
(71) Applicant: Zuno Limited, London W5 5DB (GB)
(72) Inventor: Mueller, Joerg P., Ealing, London W5 2QB (GB); Ferguson, Innes A., Ealing, London W5 3PL (GB); Jennings, Nicholas R., Staplehurst, Kent TN12 0QG (GB); Pischel, Markus, London, W4 1TH (GB); Wooldridge, Michael J., London, NW1 7BY (GB)
(74) Representative: Kidd, Piers Burgess

(57) **Abstract**

A computer system together with an autonomous agent (200) are described. The agent includes an interaction management layer (204) separate from a task management layer (202). The interaction management layer includes a service handler (216) and a resource manager (220). The service handler determines whether service requests from other agents should be passed on to the task management layer. The resource manager maintains acquaintance information (226) about resources, such as other agents, that are present in the system. The task management layer includes a task manager (208) that allocates tasks among zero or more task threads. Each task thread (230) includes a task processor (210) that breaks tasks into primitive actions, a task scheduler (212) that interacts with the resource manager to allocate the resources required to execute the actions, and a task executor (214) that executes the actions. The various modules of the agent communicate through a shared task meta controller (206).

## Description

### FIELD OF THE INVENTION

The present invention relates to software systems, and more specifically, to software systems that employ autonomous agents to perform tasks.

### BACKGROUND OF THE INVENTION

A system is autonomous if it (1) has a local control and decision mechanism that allows it to operate independent from any external control, and if it (2) has the ability of adapting its behavior to changes in its environment. A weak notion of adaptability is "reactivity", which involves the capability to react timely to asynchronous events within an environment. In addition to that, adaptability includes coping with longer-term changes in the environment the system has been designed to operate in.

Most of today's software systems are not autonomous in that they are mainly user-driven, employ an inflexible, deterministic way of responding to user input, and are insufficiently adaptive. Software programs that receive input ("perceive"), autonomously make decisions based on the input, and produce output are often referred to as agents. Both autonomy and adaptability enforce the property of pro-activeness, i.e., of the agent being able to take action in certain situations without being triggered by an external input.

An agent may be used, for example, to maneuver a robot that has no external control. Such an agent receives input through the sensors of the robot, makes decisions of about how to move the robot in response to the input from the sensors, and generates signals that cause the robot to move accordingly. Agents may also be used within computer systems, where the input and output are in the form of electronic messages.

In an object oriented computer system, an object has a set of methods that may be invoked by other objects. The methods that an object makes available to other objects may be invoked at any time. When invoked, the object itself has no way of preventing, controlling, or scheduling execution of its methods. Unlike objects, there is a decoupling of between when a message arrives at an agent and when and how the message is handled by the agent. Thus, agents can be said to have a higher degree of autonomy than objects.

Agents represent one approach to providing software programs that can react to changes in their environment, plan and make decisions autonomously, and interact with each other to accomplish tasks. Agents offer services, are able to act both in a reactive and pro-active manner, and are able to communicate with other agents in order to solve complex computational tasks through cooperation. A computational task may include maintaining a given state of a part of the environment, or achieving a specified state at a future point in time. Rational, utility-based agents can cooperatively work out dynamic and quasi-optimal allocations of scarce distributed resources.

In one application, autonomous agents are used as buyers and sellers of digital information that trade documents in a virtual market that uses the Internet as a communication medium. In this application, the agents that are buying and selling may be supported by autonomous software agents that help the user deal with information overload, find interesting documents, and that actively participate in the purchase process through negotiation or brokering.

Due to the many contexts and environments in which software agents may be used, it is desirable to provide application independent mechanisms for building agents and agent-based systems . It is further desirable to provide agents that are flexible with respect to the tasks they perform, and that are able to scale to their resource usage based on the amount of work they are currently assigned to perform.

### SUMMARY OF THE INVENTION

A method and apparatus for constructing autonomous agents that can perform computational tasks are described. Such an agent includes an interaction management layer separate from a task management layer. The interaction management layer includes a service handler and a resource manager. The service handler determines whether service requests from other agents should be passed on the task management layer. The resource manager maintains acquaintance information about resources, such as other agents, that are present in the system.

The task management layer includes a task manager that allocates tasks among zero or more task threads. Each task thread includes a task processor that breaks tasks into primitive actions, a task scheduler that interacts with the resource manager to allocate the resources required to execute the actions, and a task executor that executes the actions. The various modules of the agent can communicate through a shared task meta controller.

According to a first aspect of the present invention, there is provided a computer processing system for executing tasks, the system comprising at least one processing element, each processing element comprising:
input means for receiving a service request;
service handler means, coupled to receive a service request from the input means, comprising means for determining whether the service request is for a taskable service or a non-taskable service, and means responsive to a service request corresponding to a taskable service for passing service requests to a task manager means;
task manager means, coupled to receive service requests passed from the service handler means, for assigning the task to a task thread; and
a plurality of task threads for executing tasks assigned by the task manager means, wherein
the task manager means comprises means for determining whether to generate a new task thread for executing a task and means responsive to that determination for generating a new task and assigning the task to that task thread or for assigning that task to an existing task thread.

According to a second aspect of the present invention, there is provided a method for processing a service request in a computer system, the method comprising the steps of:
a task manager accessing task thread information to determine how many task threads are currently executing within a portion of the computer system;
said task manager accessing said task thread information to determine a current load for each existing task thread currently executing for that portion of the computer system;
said task manager selecting a task thread to process said service request, wherein said task manager selects either an existing task thread or initiates a new thread to process said service request based on how many task threads are currently executing for said agent and the current load for each of said task threads;
performing a task associated with said service request on said selected task thread;
each of said task threads notifying said task manager when a task is completed; and
the task manager updating the task thread information in response to notifications received from said task threads.

According to a third aspect of the present invention, there is provided
a computer system comprising:
one or more nodes;
an agent executing on said one or more nodes;
wherein the agent includes an input mechanism, a service handler, a task manager, and a plurality of task threads;
wherein the input mechanism is configured to receive a service request from another agent;
wherein the service handler is coupled to the input mechanism, the service handler being configured to determine whether the service request is for a taskable service or a non-taskable service, the service handler being further configured to pass the service request to the task manager if the service request is for a taskable service;
wherein the task manager is coupled to the service handler, the task manager being configured'to determine whether to assign the service request to an existing task thread of said plurality of task threads, or to a new task thread, wherein the task manager is configured to create a new task thread when the task manager determines that the task is to be assigned to a new task thread; and
wherein each of the plurality of task threads is configured to execute tasks associated with service requests assigned to the task thread by the task manager.

According to a further aspect of the present invention there is provided a method for processing a service request in a computer system, the method comprising the steps of:
causing a task manager within an agent to access task thread information to determine how many task threads are currently executing for said agent;
causing said task manager to access said task thread information to determine a current load for each existing task thread currently executing for said agent;
causing said task manager to select a task thread to process said service request, wherein said task manager selects either an existing task thread or initiates a new thread to process said service request based on how many task threads are currently executing for said agent and the current load for each of said task threads;
causing said selected task thread to perform a task associated with said service request;
causing each of said task threads to notify said task manager when a task is completed; and
causing the task manager to update the task thread information in response to notifications received from said task threads.

According to a further aspect of the present invention, there is provided an agent for use in a computer system, the agent comprising:
acquaintance information stored in memory, the acquaintance information including data identifying capabilities of other agents;
a resource manager having access to said acquaintance information;
a task scheduler that is assigned tasks associated with services that other agents have requested of the agent;
wherein the task scheduler is configured to send to the resource manager descriptions of resources required to perform a task assigned to said task scheduler;
wherein the resource manager is configured to access said acquaintance information to determine agents that correspond to said descriptions;
wherein the resource manager is further configured to transmit to said task scheduler data identifying a set of agents that correspond to said descriptions; and
a task executor for executing the task based using at least one of the agents identified in said set of agents.

According to another aspect of the present invention, there is provided an agent for use in a computer system, the agent comprising:
a task library containing descriptions of tasks used to implement services provided by said agent;
wherein said tasks include primitive tasks and non-primitive tasks;
wherein descriptions of said non-primitive tasks identify a plurality of tasks for performing said non-primitive tasks, wherein said plurality of tasks are also described in said task library;
a task processor that is configured to repeatedly expand a task that corresponds to a service request received by said agent into a plurality of subtasks based on task descriptions in said task library;
wherein said plurality of subtasks include one or more primitive tasks;
an execution mechanism configured to execute primitive tasks;
wherein the task processor is configured to transmit said one or more primitive tasks to said execution mechanism for execution.

Further, optional, features of the present invention will be apparent from study of the specific description which follows.

### BRIEF DESCRIPTION OF THE DRAWINGS

The present invention is illustrated by way of example, and not by way of limitation, in the figures of the accompanying drawings and in which like reference numerals refer to similar elements and in which:
Figure 1 is a block diagram that illustrates a computer system within which an embodiment of the invention may be implemented;
Figure 2 is a block diagram that illustrates an agent according to an embodiment of the invention;
Figure 3 is a block diagram that illustrates the task management layer 202 of the agent engine shown in Figure 2 in greater detail;
Figure 4 is a block diagram of an agent-based data retrieval system in which various embodiments of the present invention may be used; and
Figure 5 is a flow chart illustrating steps for expanding a task according to an embodiment of the invention.

### DETAILED DESCRIPTION OF THE PREFERRED EMBODIMENT

A method and apparatus for performing tasks using an autonomous agent is described. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

### HARDWARE OVERVIEW

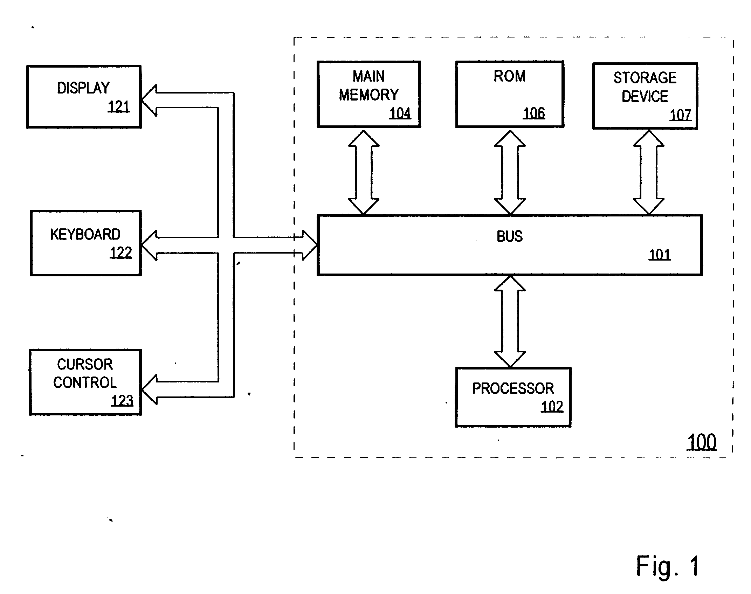

Referring to Figure 1, it is a block diagram of a computer system 100 upon which an embodiment of the present invention can be implemented. Computer system 100 includes a bus 101 or other communication mechanism for communicating information, and a processor 102 coupled with bus 101 for processing information. Computer system 100 further comprises a random access memory (RAM) or other dynamic storage device 104 (referred to as main memory), coupled to bus 101 for storing information and instructions to be executed by processor 102. Main memory 104 also may be used for storing temporary variables or other intermediate information during execution of instructions by processor 102. Computer system 100 also comprises a read only memory (ROM) and/or other static storage device 106 coupled to bus 101 for storing static information and instructions for processor 102. Data storage device 107 is coupled to bus 101 for storing information and instructions.

A data storage device 107 such as a magnetic disk or optical disk and its corresponding disk drive can be coupled to computer system 100. Computer system 100 can also be coupled via bus 101 to a display device 121, such as a cathode ray tube (CRT), for displaying information to a computer user. Computer system 100 further includes a keyboard 122 and a cursor control 123, such as a mouse.

The present invention is related to the use of computer system 100 to execute an autonomous agent. According to one embodiment, an autonomous agent is executed by computer system 100 in response to processor 102 executing sequences of instructions contained in memory 104. Such instructions may be read into memory 104 from another computer-readable medium, such as data storage device 107. Execution of the sequences of instructions contained in memory 104 causes processor 102 to perform the process steps that will be described hereafter. In alternative embodiments, hard-wired circuitry may be used in place of or in combination with software instructions to implement the present invention. Thus, the present invention is not limited to any specific combination of hardware circuitry and software.

### ARCHITECTURAL OVERVIEW

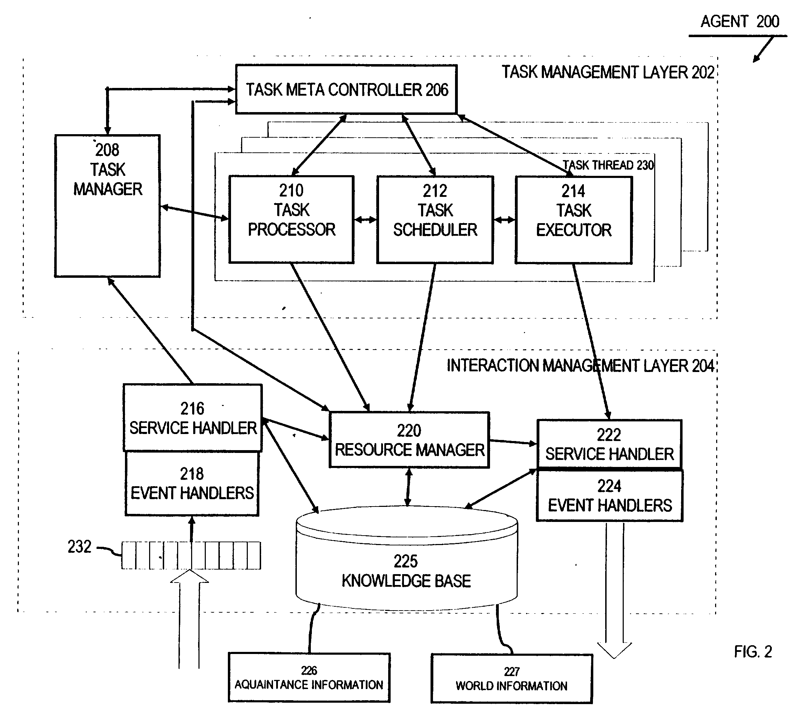

According to an embodiment of the invention, an agent 200 is provided that is constructed with an architecture which includes two main layers, an interaction management layer 204 and a task management layer 202. The two layers and their main functional components are illustrated in Figure 2. The interaction management layer 204 provides the interface of the agent 200 to its environment. Specifically, the interaction management layer 204 handles incoming and outgoing messages, and manages the resources needed by the agent 200.

Agent 200 can respond to service requests -- requests by other agents for one or more service(s) it offers -- and/or to service responses -- messages relating to earlier service requests which the agent itself invoked. Conversely, agent 200 can invoke service requests of other agents and/or can issue service responses to earlier service requests made by other agents. Over and above this, agent 200 is able to become active without necessarily being triggered by an external request. In particular, this is the case whenever the agent acts to perform a maintenance task.

The task management layer 202 embodies the computational capabilities of the agent 200 that are needed to perform requested services. The task management layer 202 includes a task manager 208, one or more task threads 230 within which tasks are processed, scheduled, and executed, as well as a task meta controller 206 which handles coordination tasks, i.e., tasks the scopes of which exceed those of individual tasks.

### AGENT SERVICES

A function which agent 200 wishes to provide to other agents is called a service. The complete collection of services which is vended by agent 200 is called an agent service interface. The range of services vended by agent 200 will vary according to the system in which agent 200 is employed and the role of agent 200 in the system.

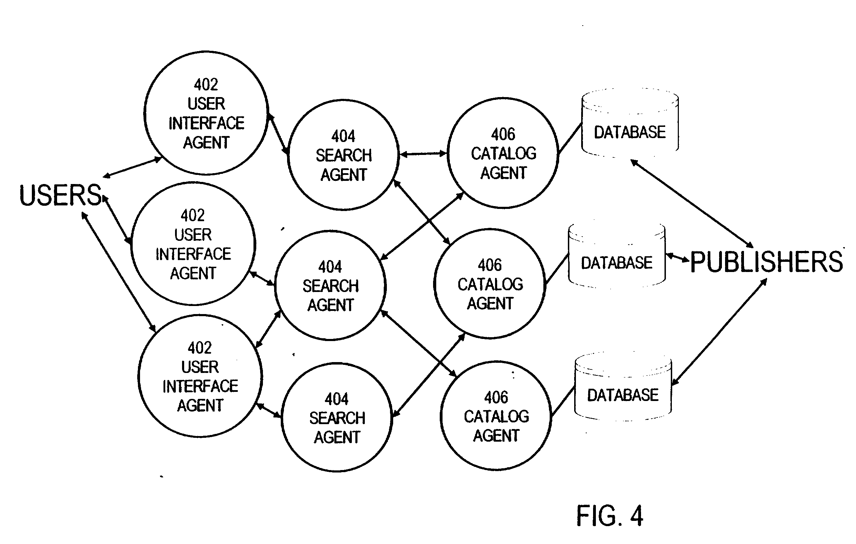

According to one embodiment of the invention, agent 200 is used within a digital library system. Figure 4 is a block diagram that illustrates a digital library system 400 that uses agents such as agent 200 to provide information to users. In system 400, different instances of agent 200 are being used as user interface agents 402, search agents 404, and catalog agents 408.

To retrieve information provided by publishers, users interact with the user interface agents 402. The user interface agents 402 are configured to interact with user and to issue search requests in response to user input. The user interface agents 402 issue the search requests to one or more search agents 404. The search agents 404 service the request by sending messages to selected catalog agents 406.

The catalog agents 406 control access to the databases that contain the information provided by the publishers. The catalog agents 406 are configured to service the requests of the search agents 404, and may respond to the request by providing information from the databases with which they are associated.

In system 400, the services provided by a search agent 404 are likely to be less complex relative to the services provided by a user interface agent 402, which would include (although would not be limited to) those services which are vended to human users of system 400. Significantly, there is no technical difference between the services targeted at users and the services targeted solely for use by other agents.

While digital library systems are one environment in which agent 200 may be employed, the use of agent 200 is not limited to digital library systems. For example, a digital library system is just one example of a class of environments that are referred to as "electronic markets" in which agents "buy" and "vend" their services. Further, electronic market environments are just one of many types of systems that can be classified as dynamically reconfigurable client/server systems, all of which may employ agent 200.

### INTER-AGENT COMMUNICATION

Communication with other agents is a core functionality of an agent 200, as it is a prerequisite for coordination and negotiation. In particular, agents exchange messages in the context of cooperation processes. A cooperation process is a pattern that describes a possibly infinite set of sequences of messages that are exchanged among two or more agents. Agent 200 is configured to provide a clear separation between the process of receiving a message and the process of further manipulation of the message. Such a separation is crucial for preserving the autonomy of the agent. Unlike objects in an object-oriented programming environment, where for instance an object A can trigger activity in an object B by calling a method of object B, agent 200 controls autonomously how and when to process incoming requests.

According to an embodiment of the invention, the separation between receiving and processing messages is achieved by collecting incoming messages in a message queue 232 and having the service handler 216 distribute the messages to the appropriate modules in the agent 200. While the present invention shall be described with reference to an embodiment that uses a message queue, various alternative mechanisms may be employed. For example, an alternative embodiment may employ a message pool for storing messages, combined with a fair selection strategy for removing and servicing the messages in the message pool.

Messages sent and received by agent 200 are characterized by a sender, a recipient, a context (allowing the recipient to determine the cooperation process the message refers to), a message type, and a content. The content information may, for example, include information about language or ontology.

### HANDLING INCOMING MESSAGES

Referring to Figure 2, messages from other entities, including other agents, are received by the interaction management layer 204 and placed in a message queue 232. According to one embodiment, such messages fall into the three general categories of request messages, reply messages, and "tell" messages. Request messages include all messages that request information or services from agent 200. Reply messages include all messages that are sent to agent 200 in response to request messages issued by agent 200. Tell messages are messages that supply unsolicited information to agent 200.

The format of the messages within the queue 232 may vary based on the protocol used by the entities that transmit the messages. Therefore, a variety of event handlers 218 are provided to support the Application Programming Interfaces (APIs) of the entities with which agent 200 expects to communicate. For example, event handlers 218 may include some that support an API to communicate with the operating system, that support an API to communicate with other instances of agent 200, and that support an API to communicate with other agents that are not instances of agent 200. The actual event handlers used by agent 200 will vary from implementation to implementation. The present,invention is not limited to any particular number or type of event handlers.

When a message comes to the head of the message queue 232, the appropriate event handler 218 retrieves the message from the message queue 232, extracts the content from the message and places the information contained in the message in a standard format expected by the service handler 216. The message is then passed to service handler 216 for further processing.

### SERVICE HANDLER 216

If a message contains a request, the service handler 216 performs any necessary authorization checks to establish whether the requester agent is entitled to the service being requested. If the requester is entitled to the requested service, service handler 216 determines whether the request corresponds to a taskable service or a non-taskable service. A taskable service request is a service request which must be handled by task management layer 202, and therefore is sent by service handler 216 to a task manager 208. Taskable service processing (via task management layer 202) involves more stages and is likely to be more costly than non-taskable service processing. Taskable service processing shall be described in greater detail below.

A non-taskable service request is a request which can be processed within the interaction management layer 204. Non-taskable service requests can be used to obtain information about elements of the agent's internal state, or to provide the agent with new information (e.g., to notify the agent when specific changes in its environment have occurred). Specifically, non-taskable service requests include queries made of the aspects of the state of agent 200 which the agent 200 deems publishable, and "tell" messages that supply unsolicited information to agent 200. The non-taskable service requests are passed on to the resource manager 220 which has access to a knowledge base 225 that includes acquaintance information 226 and information about the (non-agent) environment 227.

In addition to service requests, service responses are also processed by the service handler 216. Like service requests, service responses make use of a message-based transportation mechanism. However, service responses differ from service requests in that service responses are generated as a result of some earlier service request issued by agent 200. To ensure that each response (or set of responses) is associated with the appropriate service request, unique task identifiers are stored in both requests and responses. Request responses are passed to task manager 208 so that the information contained therein may be communicated to the task thread 230 that issued the request.

### ACQUAINTANCE INFORMATION 226

The data stored in knowledge base 225 constitutes part of the "knowledge" of agent 200. The knowledge of an agent includes (I) knowledge about the (non-agent) world (world model), knowledge the agent has about itself (self model), and knowledge about other agents (social model). The world model is represented by world information 227. The self model and social model are subsumed by the agent's acquaintance model, represented by acquaintance information 226. Both the world information and the resource manager are maintained by and accessed via the resource manager 220.

The acquaintance model holds cooperation-level knowledge, e.g., knowledge the agent 200 needs to store in order to organize,the interaction with other agents and the access to external resources. In addition, agent 200 has a local state that is largely maintained in this local knowledge base 225. In particular, knowledge base 225 is used to store information that needs to be accessed by different task threads. Logically, the acquaintance model is a part of the agent's knowledge base, i.e., the part that contains the agent's cooperation level knowledge. Abstract operations that can be performed on the knowledge base 225 are, for example, adding a piece of information to it, retrieving a piece of information from it, removing a piece of information from it, and modifying its content.

Possible embodiments of the knowledge base may vary considerably. A simple organization is that of a property list. Such a property list may contain a set of key-value pairs, where information can be stored and retrieved as the value to a key. A much more powerful embodiment of a knowledge base can be a relational database plus a query interface, or a set of predicate-logic formulae with an inference engine that can be used to verify (prove) queries formulated in a logic language.

As mentioned above, non-taskable requests are passed to the resource manager 220. Resource manager 220 is responsible for managing acquaintance information 226, which may be stored on volatile and/or non-volatile storage. According to an embodiment of the invention, the acquaintance information 226 of agent 200 is a set of descriptions of known agents and entities in the system, including agent 200 itself. Acquaintance information 226 stores useful aspects of the states of such entities. For example, acquaintance information 226 may contain data that indicates the existence of a search engine with particular capabilities that is reachable at a particular address or Universal Resource Locator (URL).

As mentioned above, non-taskable service requests are essentially accessor (read/write) functions on the stored entity state descriptions contained in the acquaintance information 226. Resource manager 220 responds to "tell" messages by storing the appropriate information into acquaintance model. Resource manager 220 responds to information requests by retrieving the appropriate state information from acquaintance information 226 and passing the information to service handler 222. Service handler 222 constructs a reply message to the request that includes the requested information and passes the reply message to the appropriate event handler of event handlers 224. The selected event handler packages and transmits the reply message according to the protocol associated with the event handler to the entity that issued the request.

Acquaintance information 226 may be obtained and kept up-to-date using an Agent Directory and Naming Service (ADN). Agent 200 can subscribe with the ADN for being notified about any agents of a certain type that register with the ADN. Upon receipt of such a notification, the acquaintance information 226 of agent 200 is automatically updated by the resource handler 220. ADNs shall be described in greater detail below.

In addition, whenever agent 200 receives a message from a currently unknown agent, it adds the information about this agent (type and address) to its acquaintance model. This is also done automatically by the resource handler 220.

### THE TASK MANAGER 208

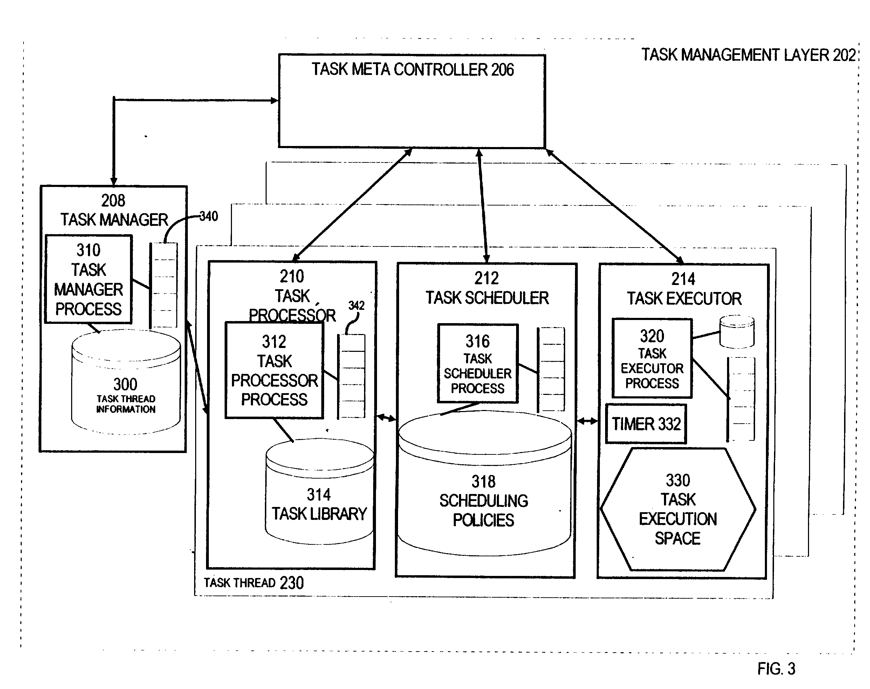

Referring to Figure 3, task manager 208 includes a task manager process 310, a queue 340, and task thread information 300. Taskable service requests and replies received from service handler 216 are initially placed in queue 340. Task manager process 310 continually retrieves and processes the messages at the head of queue 340. Alternative embodiments may use alternative data structures other than queue 340 for storing information received by the task manager 208.

The task manager 208 is responsible for handling incoming taskable service requests and responses, and for dynamically creating and terminating tasking threads 230 used to process the taskable service requests. Terminating a task thread involves both destroying the task thread physically and launching clean-up tasks that reestablish a logically consistent state (e.g. in case an ongoing interaction with another agent is canceled).

A tasking thread 230 consists of three parts: a task processor 210, a task scheduler 212, and a task executor 214. The number of tasking threads 230 an agent 200 has will vary between zero (in case the agent 200 has no task to fulfill) and the number of concurrent service requests an agent 200 has to deal with (in which case each service request is processed by a separate tasking thread 230).

Task manager 208 stores information about existing task threads 230 in task thread information 300. Task thread information 300 may be stored in volatile and/or non-volatile storage. Task thread information 300 may include, for example, data indicating how many task threads 230 currently exist, the thread identifier associated with each of the existing task threads 230, and how many tasks have been assigned to each of the existing task threads 230. As task threads 230 complete their assigned tasks, they send notifications back to task manager 208 indicating the completion of a task. In response to such notifications, task manager process 310 updates the task thread information 300 accordingly.

According to an embodiment of the invention, task thread information 300 also includes a set of rules used by task manager 208 to determine whether a newly requested task should be assigned to an existing task thread 230 (and if so, to which existing task thread the task should be assigned) or whether a new task thread 230 should be initiated to execute the new task. Specifically, in the case of a new service request, the task manager 208 performs a load balancing role by selecting a suitable tasking thread 230 on the basis of availability, cost, or whatever other criteria are deemed appropriate.

The rules that govern how task manager 208 balances the processing load between task threads 230 may vary from implementation to implementation. For example, task manager 208 may be configured to initiate a new task thread 230 for every newly requested task. Alternatively, task manager 208 may be configured to initiate up to but no more than a predetermined number of task threads 230. The present invention is not limited to any particular load balancing scheme.

In the case of a service response, the task manager 208 will post an appropriate task notification to the task meta controller 206. The response notification will contain a thread identifier that indicates the task thread 230 that initiated the request to which the response message corresponds. Task manager 208 also informs task meta controller 206 when tasks have been completed. The completed task information stored in this manner may be used during subsequent debugging operations.

### TASK META CONTROLLER 206

The task meta controller 206 performs the role of a global (per-agent) task managing authority. In particular, the task meta controller 206 has access to information from any of the task management layer 202 modules of the agent 200 and can use this information to carry out appropriate meta-level control steps that ensure the proper functioning of that part of the agent 200 concerned with task management layer 202.

According to one embodiment of the invention, the task meta controller 206 acts as a global task notification center, enabling task management layer 202 modules to inform each other of their status. Such notifications may include, for example a notification sent by task scheduler 212 that indicates that a task has unbound variables at a scheduled start time. Such a notification may be used by task processor 210, which may decide to drop the current interpretation and try another one.

The task executor 214 may be configured to send notifications that a task has started, failed, or timed out. All such notifications may be of interest to the task processor 210. The resource manager 220 may use the notifications about whether a task has failed and a task has timed out for statistics gathering about resource availability and for decommiting resources.

The task manager 208 and task executor 214 may be configured to send notifications that indicate that a task has finished and whether the task has produced a result. These notifications may be of interest to the task processor 210, task scheduler 212, and task executor 214 (when sent by the task manager 208). In addition, the resource manager 220 may want to change the status of newly decommited resources in acquaintance information 226 in response to these notifications.

Further, any of the task management layer 202 modules may be configured to send notifications that indicate whether they are available and unavailable. This information would be of interest to any module that provides input to or requires output from another module.

According to an alternative embodiment, the task meta controller 206 may incorporate additional functionality. For example, task meta controller 206 may include a mechanism for resolving dependencies between the various modules of agent 200. Such dependencies are possible when multiple task threads 230 are executing in parallel and there is some relationship between the tasks or resources that are used by the task threads. The task meta controller 206 can also be used as a store for information that is shared between the modules.

### TASK THREADS 230

As mentioned above, each task thread 230 includes a task processor 210, a task scheduler 212, and a task executor 214. A task thread 230 is assigned one or more tasks by the task manager 208. When a task thread 230 has completed all of the tasks assigned to it, the task thread 230 may terminate. According to one embodiment of the invention, such termination is automatic when all tasks have been completed. However, alternative embodiments may require an express termination signal from task manager 208 to terminate an existing task thread 230.

### TASK PROCESSOR 210

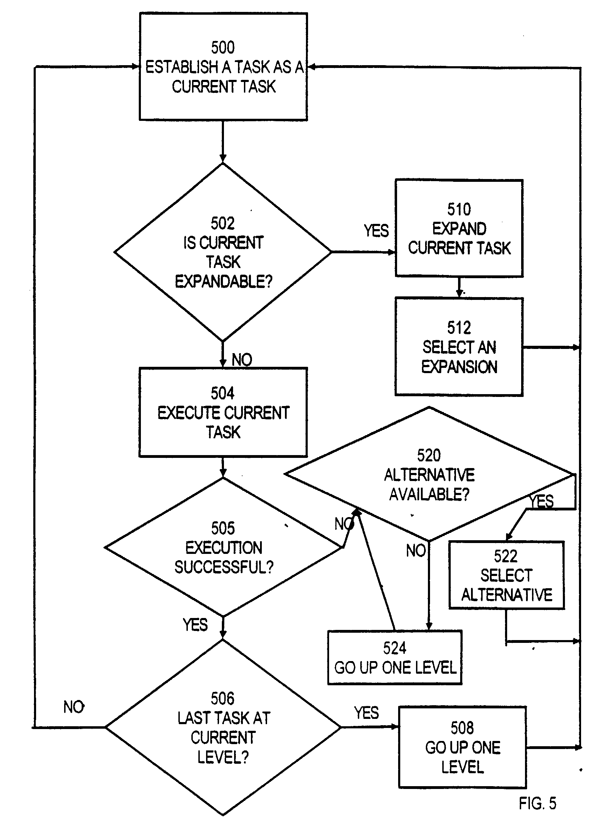

The task processor 210 includes a task processor process 312, a queue 342 for storing task requests, and a task library 314. Task processor 210 is responsible for processing service requests received from the task manager 208. Upon receiving a service request, the task processor maps the service request to a high-level task. A task is a specific set of activities which have to be performed in order to fulfill some higher level request. Task processor 210 then processes the task to which the service request was mapped. According to one embodiment of the invention, processing a task involves the steps illustrated in Figure 5.

Referring to Figure 5, it is a flow chart illustrating the steps performed during a task processing operation. At step 500, a task is established as a current task. At step 502, it is determined whether the current task is expandable (composed of other tasks). If the current task is expandable, control passes to step 510. Otherwise, control passes to step 504.

At step 510, the current task is expanded to provide a lower level set of tasks. For example, a task T may be expanded into subtasks T1, T2, T3 and T4, each of which may also expand into smaller tasks. According to one embodiment of the invention, various alternative expansions may be possible for the same task. Therefore, at step 512 one of the possible expansions is selected. Control then passes back to step 500 where a task in the lower level set of tasks (e.g. T1) is selected as the current task. The process proceeds in a recursive manner until a task that cannot be further expanded is established as the current task. Control then proceeds to step 504.

At step 504, the current task is executed. As shall be explained in greater detail below, the current task may be executed by agent 200 or by another entity at the request of agent 200.

At step 505 it is determined whether execution of the current task was successful. If execution of the task was successful, then control passes to step 506. If execution of the task was not successful, then control passes to step 520. Steps 520 and 522 constitute a loop in which recursive backtracking is used to find an alternative expansion path to the expansion path that included the task that was unsuccessful.

Specifically, at step 520 agent 200 determines whether there is an as-of-yet untried alternative task to the task that was unsuccessful. If there is no alternative task that has not yet been tried, then control passes to step 524. Otherwise, an alternative task is selected at step 522 and control passes back to step 500.

At step 524, agent 200 goes up one level in the task expansion process, and at step 520 it is determined whether the parent task of the unsuccessful task has an alternative. The loop defined by steps 520 and 524 is repeated until an untried alternative is found, or until no untried alternatives remain at any level of expansion. If no alternatives remain, then the task expansion fails as a whole.

After executing the current task, at step 506 it is determined whether the executed task was the last unprocessed task at the current level. If the executed task was the last unprocessed task at the current level, control passes to step 508 where consideration turns to the tasks identified at the previous level. Control then proceeds to step 500 and the process is repeated.

If the executed task was not the last unprocessed task at the current level, control passes to step 500 where another task is selected at the current level. This process is repeated until the highest level task is completely executed. The various steps illustrated in Figure 5 shall be described in greater detail below.

### ESTABLISHING THE CURRENT TASK

Initially, task processor 210 must establish a task as the current task to be processed. When a task description is first received from the task manager 208, the task associated with the task description in effect becomes the current task.

In addition to task requests from task manager 208, the task processor 210 is responsible for processing task completion notifications received via the task meta controller 206 (or directly from the task scheduler 212). A task completion notification is received via the task meta controller 206 when some entity has responded to a request issued earlier during the performance of a task, typically involving multiple steps, that is being processed by the task processor 210. Under these conditions, potentially important information contained in the task notification (e.g. the result returned from executing an earlier step of the task) might be needed in order to continue processing the remaining steps of the task.

When task processor 210 receives such a task notification, the task processor 210 inspects the state information within the task object to determine which next step to take in such partially processed task descriptions or expansions. Typically, both new task descriptions and ongoing task notifications will contain information (e.g. via task arguments and their values) that will have to be propagated throughout the appropriate task expansion structure.

### TASK INTERPRETATION

Once the current task has been identified and appropriate information from the task description/notification has been processed, the current task must be interpreted. Task interpretation is performed with the use of the task library 314. The task library 314 is passed a description of the current task;it returns one or more interpretations of the task. Each interpretation corresponds to a sequence of steps for performing the task in question. The interpretations returned for an expandable task may be, for example, lists of sub-tasks that can be performed to execute the expandable task. In the example given above, the task T expanded to the conjunctive set of sub-tasks T1, T2, T3 and T4.

The interpretations returned by task library 314 for primitive tasks also indicate the steps for performing the tasks. However, the steps are not specified in the form of other tasks, but in a form that allows the steps to actually be executed, either by agent 200 itself or by another entity at the request of agent 200.

For example, an interpretation of a primitive task may be specified as a set of function calls to executable code modules. Alternatively, the interpretation may be specified in code that conforms with a programming language supported by an interpreter that is incorporated in task processor 210.

### THE TASK LIBRARY 314

As mentioned above, task library 314 contains interpretations for tasks that implement the services provided by agent 200. According to one embodiment, the data for each task includes a header and a body. The header describes the task in an abstract manner. The information contained in the header can be used to search for a provider of the service associated with the task. For example, the header may identify a service of doing a search for documents in a medical or technical domain. This mechanism allows agents to vend services to other agents. Agents can use the advertised services of other agents as resources.

The body for a task describes an "interpretation" of the task. According to one embodiment, task interpretations are expressions written in a Task Description Language (TDL) which provide an expanded description of the task. If the current task is complex and/or naturally breaks down into smaller tasks, the refined description will provide a decomposition for the current task into more tasks. Otherwise, if the task is a primitive task, then the refined description will simply provide an indication that the task can no longer be refined.

According to one embodiment of the task processor 210, information about the structure of a task (e.g., about how a task can be decomposed into sub-tasks) is separated from the description of how the task is to be executed by separating between a Task Structure Language (TSL) and a Task Definition Language. In such an embodiment, the task library 314 returns TSL expressions to the task processor process 312. TSL expressions are interpreted by the task processor 312. Primitive tasks are represented by TDL programs.

There are different possible embodiments of a TSL. A simple embodiment provides exactly one language construct: a pointer to an executable TDL program in some programming language. This enforces any structural information to be encoded in the TDL. Alternative embodiments may use a TSL that allows tasks to be broken down into conjunctive subtasks, potentially coupled with precedence information. Thus, in one possible embodiment, a partial precedence ordering may be defined over the set of tasks, and each (parent) task may be decomposable into subtasks, preserving the ordering relationship over the parent tasks. More advanced TSLs may incorporate language constructs like disjunction, parallel composition (execute n tasks in parallel), tests, or iterations.

The borders between the TSL describing the structure of a task, and the TDL describing its implementation, are continuous. In the extreme, the whole task structure could be encoded in the TDL (by providing subtask calls in TDL), or the whole task implementation could be expressed in the TSL by allowing the use of a full-fledged programming language there. In a preferred embodiment, the TSL is designed by providing conjunctive decomposition and precedence relationships, but does not not prohibit creation of new subtasks from a TDL program.

As illustrated in Figure 5, processing a task is a recursive function.

Therefore, the interpretation structure of a task will correspond to a graph (typically a tree). According to an embodiment of the invention, the TDL used to describe tasks supports representing variables across tasks within a task interpretation structure. This is desirable so that variables may be used to store and propagate the results of executing tasks. Therefore, the task processor 210 provides a means for associating the contents of service responses (e.g. a response to a request for a search engine service might contain the query hit list) to specific task variables which are, in effect, references to the service responses (e.g. a talk which displays query hit lists would want the contents of such a service response).

Task variables are often global to an individual task interpretation structure. Some of the tasks from the task interpretation structure may already have been sent to the task scheduler 212. In either case, binding of all appropriate variables within the task processor 210 and task scheduler 212 must take place

There are various ways of dealing with uninstantiated variables in the processing of TDL programs. In particular, program interpretation can be "eager" or "lazy". When "eager" interpretation is used, the program stops whenever it encounters an instruction I1 with an uninstantiated variable. When "lazy" interpretation techniques are used, the interpreter just skips the instruction and continues with the next instruction I2. When, at a later point in time, the uninstantiated variable in I1 becomes instantiated, I1 can be executed. A "lazy" interpretation embodiment will often concur with an underlying concurrent computational model.

According to one embodiment, the TDL used to describe the tasks supports the unique naming of tasks. Unique task identifiers are used so that task failure notifications and responses to service requests initiated by particular executable tasks are properly handled. Task identifiers are unique within the agent that initiates processing of the corresponding tasks. Thus, since tasks are internal to agents, the system-level naming of tasks is not necessary.

### INTERPRETATION SELECTION

As mentioned above, a task may have more than one interpretation (expansion). Therefore, task processor 210 must apply a selection policy to the possibly multiple alternative interpretations returned by the task library 314. Depending on the implementation of agent 200, a number of different selection policies could be employed. For example, one selection strategy may be to choose the first interpretation in an ordered set of alternative interpretations. Alternatively, the task processor 210 may select the cheapest interpretation, in terms of resource usage. Another selection strategy may be to choose the interpretation that would yield the fastest execution, or which constitutes the smallest alternative expansion. Other selection strategies may simply be random, or may select all expansions that are possible. Selection strategies may also take into account whether the alternative task interpretations define tasks that must be executed by agent 200 itself, or that must be externally executed.

In the technique illustrated in Figure 5 constitutes a depth-first expansion strategy. However, the present invention is not limited to any particular expansion strategy. Thus, having obtained a set of interpretations at a given level, a decision must then be made whether to continue refining the task through further (recursive) interpretations or whether to allocate primitive tasks at the current level to the task scheduler 212. Further, these options are not mutually exclusive. For example, a number of combinations of different task refinement and task allocation policies could be employed. For example, a task refinement/allocation policy may call for refining tasks depth-first, and allocating tasks one-at-a-time. Alternatively, tasks may be refined breadth-first, and all currently allocatable tasks may be allocated at once.

According to one embodiment, each taskable service request received by the task manager 208 is associated with one and only one associated top-level task in the task processor 210. However, as mentioned above, such tasks can themselves be composed of other smaller tasks. Many of these smaller tasks may be strictly internal to the agent. That is, they will not form part of the published services offered by the agent. Also, to respond appropriately when a selected task interpretation subsequently leads to a failure somewhere (e.g. in the task executor 214) for some reason (e.g. a time-out), task interpretations are uniquely identified in the task interpretation structure. This enables the task processor 210, if so configured, to attempt alternative interpretations upon the detection of such a failure.

### EXECUTION OF PRIMITIVE TASKS

Task processor 210 causes primitive tasks to be executed. A primitive task is also referred to as an "action". Information about an action, such as how and when to execute it as well as the state of its execution, is stored in a way that may be shared by the modules in the task thread. According to one embodiment, a data structure (an "action object") containing this information is allocated for each action to store this information. However, alternative embodiments may employ other mechanisms for sharing this information between themselves.

In an embodiment that uses action objects, task processor 210 allocates an action object for storing state information associated with an action prior to execution of the action. Primitive tasks may or may not require the services of other agents. Primitive tasks that require the services of other agents are a subset of what is referred to herein as agent foundation calls. The action objects associated with agent foundation calls are passed to task scheduler 212.

The execution of primitive tasks that requires a service from other agents is only a subset of the agent foundation calls. In addition to such primitive tasks, agent foundation calls include resource and knowledge base handling, obtaining status information from the agent engine, logging messages and tracing/untracing. For example, an agent foundation call can serve to retrieve a piece of information from the local knowledge base, or to retrieve the currently known search agents from the acquaintance model, without actually requesting any service from other agents.

Primitive tasks that are not agent foundation calls may be executed within agent 200 itself, or may be passed for execution by another entity. According to one embodiment, primitive tasks that are not agent foundation calls are described in an interpreted language, and agent 200 incorporates an interpreter for executing the task descriptions.

According to an alternative embodiment, primitive tasks are implemented as JAVA classes. To execute a task written in JAVA, the appropriate JAVA class is started on a JAVA virtual machine. During the execution of the JAVA program, the JAVA virtual machine makes a call back to agent 200 when an agent foundation call, such as request service, is encountered in the JAVA program. When called by the JAVA virtual machine in this manner, the task processor 210 causes the agent service to be executed as shall be described hereafter. After the agent service has been executed, the task processor 210 returns the result to the JAVA virtual machine.

By executing primitive tasks using an entity external to agent 200, such as a JAVA virtual machine, the computational resources of nodes other than the node executing agent 200 may be employed. JAVA code is particularly useful in that it may be executed on across heterogeneous hardware platforms.

### TASK SCHEDULER 212

The task scheduler 212 is responsible for handling tasks sent to it by the task processor 210. Task scheduler 212 includes a task scheduler process 316 and scheduling policies 318. The scheduling policies 318 may be stored on volatile or non-volatile storage. Task scheduler 212 inspects the action objects received from task processor 210 to determine whether they contain any resource variables. If the task objects contain resource variables, task scheduler 212 determines whether the resources have been instantiated.

If the resources identified in the action object of a task have been instantiated, the task scheduler 212 schedules the task for execution. If any resources in the action object have not been instantiated, the task scheduler 212 interacts with resource manager 220 to allocate any resources that are necessary to perform the task. Information is then stored within the action object associated with the task to indicate the resources allocated to the task. The process of allocating resources shall be described in greater detail below.

According to one embodiment, the resource manager 220 does not determine the exact resources that will be used to execute a task. Rather, resource manager 220 produces a list of resources that satisfy the resource criteria specified by the task scheduler 212. The resource list is returned to the task scheduler 212 which selects one or more of the resources based on a selection strategy.

In an embodiment in which task scheduler 212 is supplied a list of possible resources, the task scheduler 212 may store the entire list of qualifying resources in the action object associated with the task. If the task subsequently fails to execute, a subsequent attempt to execute the task may be made using different resources on the list from the one or more resources used in the failed attempt. Task scheduler 212 updates the information in the action object every time an execution attempt is made using different resources so that the action object indicates which resources have already been attempted.

For example, a task may call for a search service from all search agents with an average response time less than 20 seconds. The resource manager 220 selects a subset of the available resources depending on its acquaintance information 226. If the execution fails, it may be possible to select a different subset, if necessary by relaxing some constraints (e.g., the response time requirements in the above example) according to the scheduling policy applied.

Once the appropriate resources have been allocated for a task, the task scheduler 212 schedules the task for subsequent execution. Tasks are scheduled according to whatever task scheduling policy or policies are employed by the task scheduler 212. As illustrated in Figure 3, the task scheduler process 316 accesses the scheduling policies 318 to determine how tasks are to be scheduled.

Example policies range from the extremely simple, e.g. schedule incoming tasks FIFO right away, to the less simple, e.g. simultaneously consider a number of scheduling dimensions such as time (when to start executing it, maximum length of time to complete), location (which processor to execute it on), cost (maximum price one is willing to pay for having it executed), priority (dependent perhaps on the identity of the agent -- or owner of the agent -- who requested the service in the first place), etc.

Whatever policy is employed, at some point in time a scheduled task (or set of scheduled tasks) will become eligible for execution. For a task to be eligible, the task must have no unbound variables. When all variables of a task are finally bound, task scheduler 212 sends the task to the task executor 214.

As mentioned above, the task scheduler 212 can decide, according to its rescheduling strategy and depending on the nature of the task, whether task execution should be retried by using alternative resources when task execution fails because of the unavailability of resources. For example, if the task was to query some search engine, and task execution failed because the search engine selected by the task scheduler 212 timed out, the task scheduler 212 can select an alternative search engine and restart task execution without further communication with the task processor 210.

### TASK EXECUTOR 214

When all of the resources within an action object have been instantiated, the action object is passed to the task executor 214 for execution. The task executor 214 is responsible for executing, in a FIFO manner, any tasks it receives from the task scheduler 212.

The tasks associated with the action objects that are passed to task executor 214 fall into two general categories: (i) tasks that can be executed by the agent 200 itself, and (ii) tasks that require the services of another agent or of a group of agents. For tasks that are executable by agent 200 itself, the task body will typically consist of executable code and therefore will be executed directly in the local task execution space 330. Results of executing such tasks will be posted, through task notification, to the task meta controller 206 via which interested parties (e.g. the task processor 210 and task scheduler 212) can be informed. Alternatively, the task executor 214 may communicate the information directly to the interested parties.

Tasks that require the services of another agent are processed by sending the executable task descriptions to the interaction management layer 204. The service handler 222 converts the task description into an appropriate service request or response as required. The appropriate event handler 224 formats the request according to the protocol supported by the agent to which the service request is to be sent. The service request is then sent to the appropriate agent. Service requests may be sent as narrow-cast, multi-cast or broadcast, depending on how the variable resource of the corresponding task is declared and instantiated.

In addition to executing tasks, the task executor 214 performs a number of task execution administration functions. Such functions include recording when a task has started, collecting replies to a previously broadcasted service request, detecting that the task processor 210 should be notified about the status of a particular task that is being executed, and detecting when a task has timed out or failed. For administrative functions that involve tracking the passage of time, the task executor 214 will make use of timers 322. For all such administrative functions the task executor 214 sends notifications to the task meta controller 206.

Task executor 214 may employ any one or combination of a variety of execution strategies. For example, task executor 214 may collect replies until either the first agent, the first N agents, or all agents requested have replied, or until the timeout occurs. Further, task executor 214 may return all replies, the best N replies, the best reply, or the first reply as a result to the task meta controller 206 or directly to the task scheduler 212 and/or task processor 210, for example.

According to an embodiment of the invention, the task executor 214 monitors incoming results until a specified condition occurs. Such a condition may be, for example, the elapse of a time-out period. For example, a task may involve sending a query to three search engines and waiting ten seconds for any responses. Execution is considered complete after the ten seconds and any responses received during that time are returned as the result of the action.

The task executor 214 stores the results of the operation within the action object associated with the task. After storing the results, the task executor 214 passes the action object back to the task scheduler 212. When the task was fully and successfully completed, the task scheduler 212 then passes the action object back to the task processor 210. Otherwise, the task scheduler 212 may attempt to have the task executed using different resources, as described above.

When the action object is passed back to the task processor 210, the task processor 210 extracts the results of the action from the action object. The task processor 210 may then use the results to determine the next task to be performed. In an embodiment that uses an external entity (e.g. a JAVA virtual machine) to execute primitive tasks, the task processor 210 returns the results of the task process to the external entity.

### HANDLING RESOURCE REQUESTS

In addition to managing non-taskable (accessor) service requests, the resource manager 220 is also responsible for handling resource requests from the task scheduler 212. In order to schedule a task, the task scheduler 212 must obtain commitments from any resources that are required by the task.

According to one embodiment, a task will specify a set of resource types rather than actual resources (e.g. "searchEngine" rather than "fulcrumServer1"). A resource may be any a system entity whose assistance is required in order to satisfy a service request. Thus, for example, to a search agent wishing to perform a catalogue search, a search engine could be seen as a required resource.

One way of agent 200 to access resources that do not operate in the same manner as agent 200 is to wrap these resources into an agent 200. Agents that control access to actual system resources are referred to as wrapper agents. In order to commit actual resources to the task, the task scheduler 212 must provide the resource manager 220 with the required resource type(s) plus any known task constraints associated with these resource types (e.g. when needed, for how long, what quality of service required, how many instances of the resource are needed, etc.). The task scheduler 212 must then wait for the resource manager 220 to return with the set of named resources.

To obtain commitments from actual resources, the resource manager 220 will access its acquaintance information 226 in order to identify all named resources that provide the desired type of service. Having identified a set of named resources, the resource manager 220 will, upon applying a selection policy to this set, obtain commitments to the task.

It is possible that none of the resources in the acquaintance information 226 provide the services required by the task in question. Under these conditions, the resource manager 220 may query a registration mechanism to determine if any registered resource can provide the required service. Resource registration mechanisms shall be described in greater detail below.

Selection policies used by the resource manager 220 typically incorporate all constraints received from the task scheduler 212 plus any others that are of specific interest to the resource manager 220. For example, the resource manager 220 may be keeping statistics on the run-time availability of various system entities and so might impose its own criteria for prioritized selecting on the basis of past availability. Selection policies could range from the simple (e.g. first found) to the arbitrarily sophisticated (e.g. ask a broker to perform the selection on your behalf, tender bids from potential candidates, etc.) Whatever policy is employed, the resource manager 220 is responsible for obtaining commitments from selected resources.

### OBTAINING COMMITMENTS FROM RESOURCES

Various mechanisms are provided for obtaining commitments from selected resources. One mechanism involves explicit messaging to the resource (agent) in question. Messaging is initiated by the resource manager 220, and the resource manager 220 handles the response. The response is treated as a non-taskable service response.

Another mechanism for obtaining commitments from selected resources relies on the agent's acquaintance information 226 to have accurate and up-to-date information about resource availability, cost, location, etc. so that the resource manager 220 would know in advance whether the named resource was suitable. This information is placed in the acquaintance information 226 proactively by the resource agents themselves with the use of accessor functions, as described above.

Reliance on the accuracy of the acquaintance information might be particularly useful between agents with a "special" relationship (e.g. same owner, compatible privacy criteria, etc.) While the resource manager 220 would still have to obtain commitments through messaging, the total number of messages sent during resource allocation would be reduced. This could speed up the time taken to allocate resources. However, the messages sent by resource agents to proactively inform other agents about themselves may result in an increase in the total number of messages sent within the system.

A third approach to obtaining commitments from selected resources combines the explicit request approach and the reliance approach described above. Specifically, the resource manager 220 selects named resources from its acquaintance information 226 (optionally using statistical information regarding past availability) and then treats the resources as committed resources. That is, no messaging takes place to guarantee commitment. This last mechanism has the advantage of being extremely simple and might be useful when there is no major concern about resource availability. The main disadvantage of this mechanism is that there is greater uncertainty about the actual availability of committed resources.

Further, an alternative embodiment of the invention may employ a hybrid combination of resource allocation approaches. For example, where real commitment guarantees are needed, the resource manager 220 may obtain the resource commitments through explicit messaging. When no such guarantees are required, the resource manager 220 may simply assume commitment.

### ACQUIRING ACQUAINTANCE INFORMATION

Resource manager 220 may acquire acquaintance information 226 in a variety of ways. For example, agents may pro-actively inform agent 200 about themselves using "tell" messages, as described above. According to one embodiment of the invention, an Agent Directory and Naming (ADN) process is provided which serves as a registration and notification center where new agents can register, and where agents can subscribe for notifications about new agents entering the system. The ADN allows agent 200 to deal with dynamically changing agent societies.

Preferably, resources would register themselves by submitting enough information to allow other agents to determine whether they will be useful in particular situations. For example, a search agent may submit information about the types of searches it can perform as well as data indicating that it is a search agent with a particular name.

Alternative embodiments of the invention may employ more sophisticated agent-based registry systems. For example, different ADNs may be organized in a network structure that maintains a variety of local name spaces, thus ensuring scalability of the system.

### MULTIPROCESSING WITHIN AGENT 200

Agent 200 supports multiprocessing in that agent 200 is able to carry out service requests in parallel, and is able to handle communication and perception independent from tasking. Thus, while carrying out some task, agent 200 is able to react to new events. The ability to handle communication independent from tasking is provided by separating interaction management from task management. The ability to handle tasks in parallel is provided by having several tasking units running in parallel.

Assigning a separate tasking thread 230 to a service request is particularly useful because of three conditions that usually exist in an agent-based system. First, the granularity of a service request is usually such that a service requires an amount of computation that justifies allocating a separate computational space for it. To avoid inefficiency for those services where this condition is not true, very simple interactions between agents are handled by the interaction management layer 204 without involving the task management layer 202.

Second, different service requests are in most cases independent from each other. In cases where there are dependencies, the task meta controller 206 and resource manager 220 can serve as a source of common knowledge and synchronization. For example, two search tasks could share results of a previous query via the task meta controller 206.

Third, processing within a tasking thread 230 is typically (though not necessarily) sequential. However, for implementations in which multi-tasking within a task thread 230 is desirable, a concurrent task description language may be employed.

According to one embodiment, task management throughput is increased by making task processor 210, task scheduler 212, and task executor 214 capable of handling asynchronous input and output. For example, task scheduler 212 may be configured to handle incoming schedule requests while simultaneously waiting for the resource manager 220 to allocate resources to another task.

In the foregoing specification, the invention has been described with reference to specific embodiments thereof. It will, however, be evident that various modifications and changes may be made thereto without departing from the broader spirit and scope of the invention. The specification and drawings are, accordingly, to be regarded in an illustrative rather than a restrictive sense.

## Claims

1. A computer processing system for executing tasks, the system comprising at least one processing element, each processing element comprising:
input means for receiving a service request;
service handler means, coupled to receive a service request from the input means, comprising means for determining whether the service request is for a taskable service or a non-taskable service, and means responsive to a service request corresponding to a taskable service for passing service requests to a task manager means;
task manager means, coupled to receive service requests passed from the service handler means, for assigning the task to a task thread; and
a plurality of task threads for executing tasks assigned by the task manager means, wherein
the task manager means comprises means for determining whether to generate a new task thread for executing a task and means responsive to that determination for generating a new task and assigning the task to that task thread or for assigning that task to an existing task thread.

2. A computer processing system as claimed in Claim 1, wherein a task thread of said plurality of task threads includes a task processor, and wherein:
the task processor comprises means for expanding a task associated with the service request into a plurality of subtasks, wherein
at least one of said plurality of subtasks constitutes a primitive task that is not broken down into subtasks; and
the task processor comprises means for executing the primitive task.

3. A computer processing system as claimed in Claim 2, wherein:
the task processor includes a task library;
the task library contains task descriptions of tasks associated with all services provided by the plurality of task threads;
the task description of each task that is not a primitive task indicates a set of tasks used to perform the task; and
the task processor comprises means for expanding the task associated with the service request in response to the task descriptions contained in the task library.

4. A computer processing system as claimed in any one of Claims 1 to 3, further comprising a resource manager that has access to acquaintance information; wherein
the service handler is arranged to pass the service request to the resource manager when the request is for a non-taskable service; and
the resource manager is arranged to access information within the acquaintance information in response to the service request for a non-taskable service.

5. The computer system of Claim 1 wherein:
each task thread of said plurality of task threads includes a task executor;
each task executor is configured to execute tasks provided within the plurality of task threads; and
each task executor is further configured to cause messages to be sent to other pluralities of task threads for the remaining tasks.

6. A method for processing a service request in a computer system, the method comprising the steps of:
a task manager accessing task thread information to determine how many task threads are currently executing within a portion of the computer system;
said task manager accessing said task thread information to determine a current load for each existing task thread currently executing for that portion of the computer system;
said task manager selecting a task thread to process said service request, wherein said task manager selects either an existing task thread or initiates a new thread to process said service request based on how many task threads are currently executing for said agent and the current load for each of said task threads;
performing a task associated with said service request on said selected task thread;
each of said task threads notifying said task manager when a task is completed; and
the task manager updating the task thread information in response to notifications received from said task threads.

7. A method as claimed in Claim 6 further comprising the steps of:
determining a set of alternative resources that can be used to accomplish the task associated with said service request;
attempting to executing said task using a first selected resource of said alternative set of resources;
if said task was not successfully executed using said first selected resource, then performing the steps of
storing an indication that the first selected resource was used in an attempt to execute said task; and
attempting to execute said task using a second selected resource of said alternative set of resources.

8. A method as claimed in Claim 7 wherein:
the first selected resource is a second plurality of task threads;
the method further comprises the steps of
monitoring elapsed time from an attempt to use said second plurality of task threads; and
determining that said attempt to execute the task using said second agent was not successful if said elapsed time exceeds a predetermined threshold without receiving a response from said second agent.

9. An agent for use in a computer system, the agent comprising:
acquaintance information stored in memory, the acquaintance information including data identifying capabilities of other agents;
a resource manager having access to said acquaintance information;
a task scheduler that is assigned tasks associated with services that other agents have requested of the agent;
wherein the task scheduler is configured to send to the resource manager descriptions of resources required to perform a task assigned to said task scheduler;
wherein the resource manager is configured to access said acquaintance information to determine agents that correspond to said descriptions;
wherein the resource manager is further configured to transmit to said task scheduler data identifying a set of agents that correspond to said descriptions; and
a task executor for executing the task based using at least one of the agents identified in said set of agents.

10. The agent of Claim 9 further comprising a task manager configured to assign service requests received by said agent to task threads, wherein each task thread includes a task scheduler and a task executor, wherein the task manager controls the number and load of task threads for said agent based on a predetermined load balancing policy.

11. The agent of Claim 9 further comprising:
a task library containing descriptions of tasks used to implement services provided by said agent;
wherein said tasks include primitive tasks and non-primitive tasks;
wherein descriptions of said non-primitive tasks identify a plurality of tasks for performing said non-primitive tasks, wherein said plurality of tasks are also described in said task library;
a task processor that is configured to repeatedly expand a task that corresponds to a service request received by said agent into a plurality of subtasks based on task descriptions in said task library;
wherein said plurality of subtasks include one or more primitive tasks; and wherein the task processor is configured to assign said one or more primitive tasks to said task scheduler.

12. An agent for use in a computer system, the agent comprising:
a task library containing descriptions of tasks used to implement services provided by said agent;
wherein said tasks include primitive tasks and non-primitive tasks;
wherein descriptions of said non-primitive tasks identify a plurality of tasks for performing said non-primitive tasks, wherein said plurality of tasks are also described in said task library;
a task processor that is configured to repeatedly expand a task that corresponds to a service request received by said agent into a plurality of subtasks based on task descriptions in said task library;
wherein said plurality of subtasks include one or more primitive tasks;
an execution mechanism configured to execute primitive tasks;
wherein the task processor is configured to transmit said one or more primitive tasks to said execution mechanism for execution.
